# EUROPEAN PATENT SPECIFICATION

(11) **EP 4 305 899 B1**
(45) Date of publication and mention of the grant of the patent: **15.10.2025**
(21) Application number: 22707570.2
(22) Date of filing: 15.02.2022
(51) Int. Cl.: H04W 72/02, H04W 72/20, H04W 74/0808

(54) **TECHNIQUES FOR SIDELINK RESOURCE RESERVATION**
VERFAHREN ZUR SIDELINK-RESSOURCENRESERVIERUNG
TECHNIQUES DE RÉSERVATION DE RESSOURCES DE LIAISON LATÉRALE

(30) Priority: 12.03.2021 GR 20210100153
(43) Date of publication of application: 17.01.2024
(73) Proprietor: QUALCOMM INCORPORATED, San Diego, California 92121-1714 (US)
(72) Inventor: WU, Shuanshuan, San Diego, California 92121-1714 (US); STEFANATOS, Stelios, San Diego, California 92121-1714 (US); GUBESKYS, Arthur, San Diego, California 92121-1714 (US); XU, Huilin, San Diego, California 92121-1714 (US)
(74) Representative: Bardehle Pagenberg Partnerschaft mbB Patentanwälte Rechtsanwälte
(86) International application number: PCT/US2022/016478
(87) International publication number: WO 2022/191961

(56) References cited:
- US-A1- 2017 202 043
- US-A1- 2020 029 340

## Description

### FIELD OF DISCLOSURE

The present disclosure, for example, relates to wireless communications systems, more particularly to techniques for sidelink resource reservation.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

Some wireless communications systems may support sidelink communications over a licensed frequency spectrum band and an unlicensed frequency spectrum band. For example, a UE may be configured to communicate sidelink messages over one or more carriers in the licensed frequency spectrum band and over one or more carriers in the unlicensed frequency spectrum band. In some cases, limited available bandwidths associated with the licensed frequency spectrum band may increase congestion of the licensed frequency spectrum band. Additionally, in some cases, communications devices of multiple radio access technologies (RATs) (e.g., 5G systems, 4G systems, or other RATs) may share the unlicensed frequency spectrum band, which may cause relatively high and unpredictable levels of interference, thereby reducing a reliability of message communicated over the unlicensed frequency spectrum band.

US 2017/202043 A1 discloses a wireless access system supporting an unlicensed band, and provides a method and an apparatus for performing direct device-to-device communication. The method for performing direct device-to-device communication in a wireless access system, according to an embodiment of the disclosure, comprises the steps of: receiving, by a terminal, information about an unlicensed band through a licensed band; determining whether or not to receive a data signal in the unlicensed band on the basis of information about the unlicensed band; and receiving a data signal within a predetermined time of the unlicensed band when it is determined to receive the data signal.

US 2020/029340 A1 relates to NR V2X resource selection.

### SUMMARY

The invention relates to a method defined by independent claim 1, and an apparatus defined by independent claim 14. Preferred embodiments are defined by claims 2-13 and 15. The described techniques relate to improved methods, systems, devices, and apparatuses that support techniques for sidelink resource reservation. The described techniques provide for increasing resource utilization and reliability of sidelink communications by enabling cross-carrier reservation of sidelink resources. For example, a UE may communicate sidelink messages over a licensed frequency spectrum band and an unlicensed frequency spectrum band. The UE determines one or more sidelink resources for transmission of a sidelink message (e.g., sidelink data, sidelink control signaling) in a carrier of the unlicensed frequency spectrum band (e.g., an unlicensed carrier), for example, by decoding one or more sidelink control messages transmitted in one or both of the licensed frequency spectrum band and the unlicensed frequency spectrum band. The UE transmits sidelink control signaling (e.g., sidelink control information (SCI)) in a carrier of the licensed frequency spectrum band (e.g., a licensed carrier) to reserve the one or more sidelink resources of the unlicensed carrier. The UE then transmits the sidelink message in the one or more sidelink resources of the unlicensed carrier. In some examples, the UE may perform a channel access procedure (e.g., a listen-before-talk (LBT) procedure) prior to transmitting the sidelink message and may transmit or refrain from transmitting the sidelink message based on the channel access procedure.

A method for wireless communication at a user equipment (UE) is described. The method includes determining, by the UE, one or more sidelink resources for transmission of sidelink data in a first carrier in an unlicensed frequency spectrum band, transmitting, by the UE, sidelink control signaling in a second carrier in a licensed frequency spectrum band to reserve the one or more sidelink resources of the first carrier in the unlicensed frequency spectrum band, and transmitting the sidelink data in the one or more sidelink resources of the first carrier in the unlicensed frequency spectrum band based on transmitting the sidelink control signaling.

Another apparatus for wireless communication at a UE is described. The apparatus includes means for determining, by the UE, one or more sidelink resources for transmission of sidelink data in a first carrier in an unlicensed frequency spectrum band, means for transmitting, by the UE, sidelink control signaling in a second carrier in a licensed frequency spectrum band to reserve the one or more sidelink resources of the first carrier in the unlicensed frequency spectrum band, and means for transmitting the sidelink data in the one or more sidelink resources of the first carrier in the unlicensed frequency spectrum band based on transmitting the sidelink control signaling.

Some examples of the method, apparatuses, and non-transitory computer-readable medium described herein may further include operations, features, means, or instructions for performing, prior to transmitting the sidelink data, a channel access procedure associated with the one or more sidelink resources of the first carrier, where transmitting the sidelink data may be based on performing the channel access procedure.

Some examples of the method, apparatuses, and non-transitory computer-readable medium described herein may further include operations, features, means, or instructions for decoding one or more sidelink control messages transmitted in the licensed frequency spectrum band to determine a set of available sidelink resources for transmission of the sidelink data that includes the one or more sidelink resources of the first carrier in the unlicensed frequency spectrum band, where determining the one or more sidelink resources of the first carrier in the unlicensed frequency spectrum band may be based on decoding the one or more sidelink control messages transmitted in the licensed frequency spectrum band.

Some examples of the method, apparatuses, and non-transitory computer-readable medium described herein may further include operations, features, means, or instructions for decoding one or more sidelink control messages transmitted in the unlicensed frequency spectrum band to determine a set of available sidelink resources for transmission of the sidelink data that includes the one or more sidelink resources of the first carrier in the unlicensed frequency spectrum band, where determining the one or more sidelink resources of the first carrier in the unlicensed frequency spectrum band may be based on decoding the one or more sidelink control messages transmitted in the unlicensed frequency spectrum band.

Some examples of the method, apparatuses, and non-transitory computer-readable medium described herein may further include operations, features, means, or instructions for determining a set of available sidelink resources for transmission of the sidelink data that includes the one or more sidelink resources of the first carrier in the unlicensed frequency spectrum band based on respective reference signal received powers associated with one or more sidelink control messages used to reserve sidelink resources in the first carrier in the unlicensed frequency spectrum band.

Some examples of the method, apparatuses, and non-transitory computer-readable medium described herein may further include operations, features, means, or instructions for determining that a sidelink resource of the first carrier in the unlicensed frequency spectrum band may be available based on a reference signal received power associated with a sidelink control message that reserves the sidelink resource satisfying a threshold power.

The method, apparatuses, and non-transitory computer-readable medium described herein further include operations, features, means, or instructions for transmitting second control signaling in the one or more sidelink resources of the first carrier in the unlicensed frequency spectrum band to reserve one or more sidelink resources for transmission of second sidelink data in the first carrier in the unlicensed frequency spectrum band.

Some examples of the method, apparatuses, and non-transitory computer-readable medium described herein may further include operations, features, means, or instructions for reserving one or more sidelink resources of the second carrier in the licensed frequency spectrum band for transmission of the sidelink control signaling. In some examples of the method, apparatuses, and non-transitory computer-readable medium described herein, transmitting the sidelink control signaling may include operations, features, means, or instructions for transmitting the sidelink control signaling using the one or more sidelink resources of the second carrier.

In some examples of the method, apparatuses, and non-transitory computer-readable medium described herein, reserving the one or more sidelink resources of the second carrier in the licensed frequency spectrum band may include operations, features, means, or instructions for randomly selecting the one or more sidelink resources of the second carrier in the licensed frequency spectrum band from a set of available sidelink resources of the second carrier in the licensed frequency spectrum band.

In some examples of the method, apparatuses, and non-transitory computer-readable medium described herein, reserving the one or more sidelink resources of the second carrier in the licensed frequency spectrum band may include operations, features, means, or instructions for selecting an earliest available sidelink resource in time of a set of available sidelink resources of the second carrier in the licensed frequency spectrum band.

In some examples of the method, apparatuses, and non-transitory computer-readable medium described herein, transmitting the sidelink control signaling may include operations, features, means, or instructions for transmitting the sidelink control signaling in one or more unreserved sidelink resources of the second carrier in the licensed frequency spectrum band.

Some examples of the method, apparatuses, and non-transitory computer-readable medium described herein may further include operations, features, means, or instructions for determining, by the UE, one or more sidelink resources for transmission of the sidelink data in a third carrier in the unlicensed frequency spectrum band, where the sidelink control signaling reserves the one or more sidelink resources in the third carrier in the unlicensed frequency spectrum band and transmitting the sidelink data in the one or more sidelink resources of the third carrier in the unlicensed frequency spectrum band.

In some examples of the method, apparatuses, and non-transitory computer-readable medium described herein, the sidelink control signaling indicates a first index corresponding to the first carrier in the unlicensed frequency spectrum band and a second index corresponding to the third carrier in the unlicensed frequency spectrum band.

In some examples of the method, apparatuses, and non-transitory computer-readable medium described herein, the sidelink control signaling further reserves one or more sidelink resources for transmission of second sidelink data in the first carrier in the unlicensed frequency spectrum band.

In some examples of the method, apparatuses, and non-transitory computer-readable medium described herein, the sidelink control signaling further reserves one or more sidelink resources for transmission of second control signaling in the second carrier in the licensed frequency spectrum band.

In some examples of the method, apparatuses, and non-transitory computer-readable medium described herein, the sidelink control signaling may be a sidelink control information (SCI) message transmitted in a physical sidelink control channel (PSCCH).

In some examples of the method, apparatuses, and non-transitory computer-readable medium described herein, the sidelink control signaling includes a medium access control-control element (MAC-CE), radio resource control (RRC) signaling, or a combination thereof, transmitted in a physical sidelink shared channel (PSSCH).

In some examples of the method, apparatuses, and non-transitory computer-readable medium described herein, the sidelink data may be transmitted on a PSSCH.

### BRIEF DESCRIPTION OF THE DRAWINGS

FIGs. 1 and 2 illustrate examples of wireless communications systems that supports techniques for sidelink resource reservation in accordance with various aspects of the present disclosure.
FIG. 3 illustrates an example of a carrier scheme that supports techniques for sidelink resource reservation in accordance with various aspects of the present disclosure.
FIG. 4 illustrates an example of a process flow that supports techniques for sidelink resource reservation in accordance with various aspects of the present disclosure.
FIGs. 5 and 6 show block diagrams of devices that support techniques for sidelink resource reservation in accordance with various aspects of the present disclosure.
FIG. 7 shows a block diagram of a communications manager that supports techniques for sidelink resource reservation in accordance with various aspects of the present disclosure.
FIG. 8 shows a diagram of a system including a device that supports techniques for sidelink resource reservation in accordance with various aspects of the present disclosure.
FIGs. 9 through 13 show flowcharts illustrating methods that support techniques for sidelink resource reservation in accordance with various aspects of the present disclosure.

### DETAILED DESCRIPTION

Some wireless communications systems may support sidelinks for communications between communication devices. Sidelinks may refer to any communication link between similar communication devices such as user equipments (UEs). It is noted that while various examples provided herein are discussed for UE sidelink devices, such sidelink techniques may be used for any type of wireless devices that use sidelink communications. For example, a sidelink may support one or more of device-to-device (D2D) communications, vehicle-to-everything (V2X) or vehicle-to-vehicle (V2V) communications, message relaying, discovery signaling, beacon signaling, or other signals transmitted over-the-air from one UE to one or more other UEs.

Additionally, some wireless communications systems may support sidelink communications over a licensed frequency spectrum band and an unlicensed frequency spectrum band. For example, a UE may be configured with one or more carriers in the licensed frequency spectrum band (e.g., licensed carriers) and one or more carriers in the unlicensed frequency spectrum band (e.g., unlicensed carriers) over which the UE may communicate sidelink messages. In some examples, a licensed frequency spectrum band may be associated with an individual radio access technology (RAT) such as a fourth generation (4G) system, a fifth-generation (5G) system, a V2X system, or some other RAT. Accordingly, communications over licensed carriers may not experience interference caused by communications associated with a different RAT. However, communication devices associated with multiple different RATs may share (e.g., communicate over) the unlicensed frequency spectrum which may cause relatively high and unpredictable levels of interference compared to communicating over the licensed frequency spectrum band. Accordingly, in some cases, UEs may prefer to communicate using licensed carriers, which may increase congestion of the licensed frequency spectrum band.

Additionally, in some cases, sidelink communications may be reservation based. For example, UEs may transmit sidelink control signaling to reserve sidelink resources for sidelink transmissions. However, sidelink control signaling that is transmitted in unlicensed carriers may suffer reduced reliability and likelihood of being properly decoded, for example, due to the unpredictable interference experienced in unlicensed carriers. As a result, reservations may be missed resulting in potentially conflicting reservations and transmissions on the unlicensed carriers, thus further increasing interference and reducing reliability of communications in the unlicensed frequency spectrum band.

Techniques are described herein for reducing licensed frequency spectrum band congestion and increasing unlicensed frequency spectrum band communication reliability via cross-carrier reservation of sidelink resources. For example, a UE may determine a set of available sidelink resources for transmission of a sidelink message (e.g., sidelink data, sidelink control signaling) in an unlicensed carrier. In some examples, the UE may determine the set of available sidelink resources in the unlicensed carrier by decoding one or more sidelink control messages transmitted in one or both of the licensed frequency spectrum band and the unlicensed frequency spectrum band. The UE may determine one or more sidelink resources in the unlicensed carrier from the set of available sidelink resources and may transmit sidelink control signaling (e.g., sidelink control information (SCI)) in a licensed carrier to reserve the one or more sidelink resources of the unlicensed carrier. By transmitting the sidelink control signaling in the licensed carrier, the UE may increase a reliability of the sidelink control signaling compared to transmitting the sidelink control signaling in an unlicensed carrier.

The UE may then transmit the sidelink message in the one or more sidelink resources of the unlicensed carrier. In some examples, the UE may perform a channel access procedure (e.g., a listen-before-talk (LBT) procedure, a clear channel assessment (CCA) procedure) prior to transmitting the sidelink message to ensure that the one or more sidelink resources are available. In some cases, if the channel access procedure is successful, the UE may transmit the sidelink data in the one or more sidelink resources.

Aspects of the subject matter described in this disclosure may be implemented to realize one or more of the following potential improvements, among others. The techniques employed by the UE may provide benefits and enhancements to the operation of the UE. For example, operations performed by the UE may provide improvements to sidelink communications over licensed frequency spectrum bands and unlicensed frequency spectrum bands. In some examples, cross-carrier sidelink resource reservation may increase data rates, spectral efficiency, and reliability of sidelink communications. In some other examples, cross-carrier sidelink resource reservation may provide improvements to channel congestion, latency, power consumption, resource usage, coordination between devices, battery life, and processing capability among other benefits.

Aspects of the disclosure are initially described in the context of wireless communications systems. Aspects of the disclosure are additionally described in the context of a carrier scheme and a process flow. Aspects of the disclosure are further illustrated by and described with reference to apparatus diagrams, system diagrams, and flowcharts that relate to techniques for sidelink resource reservation.

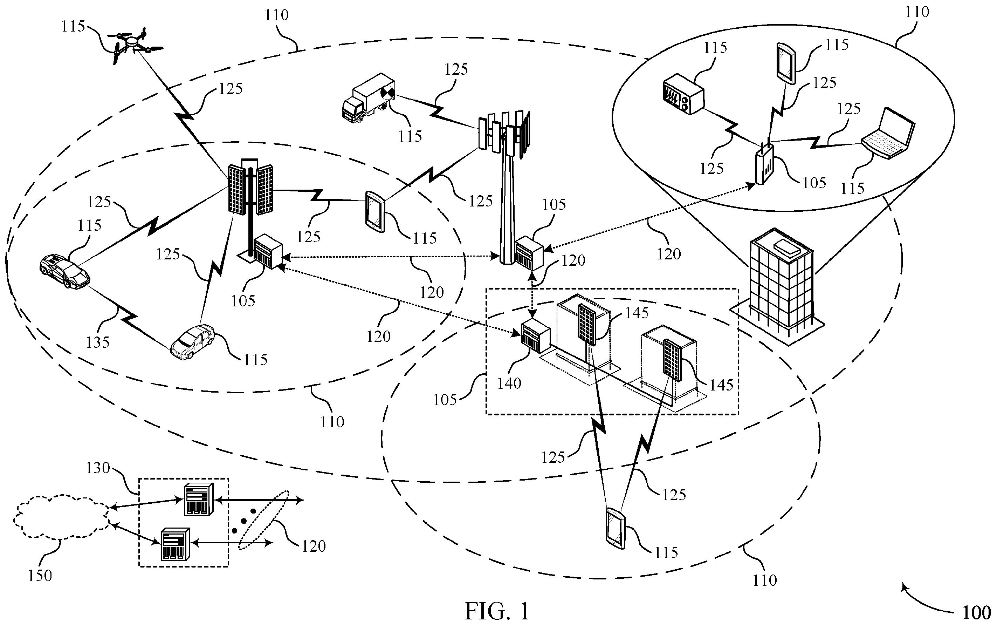

**FIG. 1** illustrates an example of a wireless communications system 100 that supports techniques for sidelink resource reservation in accordance with various aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may include one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a D2D communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using V2X communications, V2V communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). In some examples, the region from 300 MHz to 3 GHz is known as the ultrahigh frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) RAT, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. For example, the base stations 105 and/or the UEs 115 may perform a channel access procedure such as an LBT procedure, a CCA procedure, or some other contention-based access procedure to determine if a channel (e.g., a frequency channel, a physical channel) is available prior to initiating transmissions. In some examples, the channel access procedure may be a type 1 channel access procedure, such as a category (CAT)-4 LBT procedure, or a type 2 channel access procedure, such as a 2a, 2b, 2c, CAT-1, or CAT-2 LBT procedure. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

In some examples, the wireless communications system 100 may be an example of a sidelink network. Here, the sidelink network may support one or more resource allocation modes to coordinate sidelink communications between UEs 115 (e.g., over D2D communication links 135, over PC5 links). For example, the sidelink network may be configurable to operate according a Mode 1 resource allocation mode and/or a Mode 2 resource allocation mode. While operating in Mode 1, the sidelink network (e.g., sidelink communications over the sidelink network) may be managed (e.g., coordinated) by a base station 105. For example, during Mode 1 operation, the base station 105 may manage sidelink resource allocation over the sidelink network.

While operating in Mode 2, the sidelink network may not be managed or coordinated by the base station 105. Without coordination or management of sidelink resources of the sidelink network during the Mode 2 operation, UEs 115 may follow contention-based access procedures in which the various UEs 115 may reserve sidelink resources of the sidelink network. For example, during Mode 2 operation, a UE 115 may monitor the sidelink network to determine if other UEs 115 are attempting to transmit over the sidelink network. For instance, the UE 115 may decode one or more reservation messages (e.g., sidelink control channel transmissions such as sidelink control information (SCI) messages, SCI-1 messages, SCI-2 messages, request-to-send-messages, or some other sidelink control channel transmissions) and may determine which sidelink resources are reserved for other sidelink communications and which sidelink resources are available for sidelink communications based on the reservation messages. In some examples, the UE 115 may determine whether a sidelink resource is reserved based on measuring a reference signal received power (RSRP) of an associated reservation message. In some cases, the UE 115 may determine which sidelink resources are available for sidelink communications based on reservation messages decoded during a sensing window, where the sensing window corresponds to some duration of time prior to the arrival of a packet of information. In some examples, the packet arrival may trigger the UE 115 to determine which sidelink resources are available and to reserve sidelink resources.

In some examples, UEs 115 may be configured with one or more sidelink resource pools from which to select and reserve sidelink resources (e.g., during Mode 2 operation). In some cases, sidelink resource pools may include transmit sidelink resource pools (e.g., sets of sidelink resources over which the UE 115 may transmit sidelink messages) and receive sidelink resource pools (e.g., sets of sidelink resources over which the UE 115 may receive sidelink messages). The sidelink resource pools may be configured for Mode 1 communications or for Mode 2 communications. In some examples, a sidelink resource pool configuration for a sidelink resource pool may include a physical sidelink shared channel (PSSCH) configuration, a physical sidelink control channel (PSCCH) configuration, physical sidelink feedback channel (PSFCH) configuration, a quantity of subchannels in the sidelink resource pool, a subchannel size, a starting resource block of the sidelink resource pool, a modulation and coding scheme (MCS) associated with the sidelink resource pool, a sensing configuration, a power control configuration, a constant bit rate (CBR), or a combination thereof.

The wireless communications system 100 may support sidelink communications between UEs 115 over a licensed frequency spectrum band and an unlicensed frequency spectrum band. To reduce congestion of the licensed frequency spectrum band and to increase a reliability of sidelink communications over the unlicensed frequency spectrum band, the wireless communications system 100 may support cross-carrier reservation of sidelink resources. For example, a UE 115 may determine one or more sidelink resources of an unlicensed carrier from a set of available sidelink resources to transmit a sidelink message (e.g., sidelink data, sidelink control signaling, or both). The UE 115 may transmit sidelink control signaling (e.g., SCI) in a licensed carrier to reserve the one or more sidelink resources of the unlicensed carrier and may transmit the sidelink message in the one or more sidelink resources of the unlicensed carrier. In some examples, the UE 115 may perform a channel access procedure prior to transmitting the sidelink message to ensure that the one or more reserved sidelink resources in the unlicensed carrier are available. In some cases, if the channel access procedure is successful, the UE 115 may transmit the sidelink data in the one or more sidelink resources.

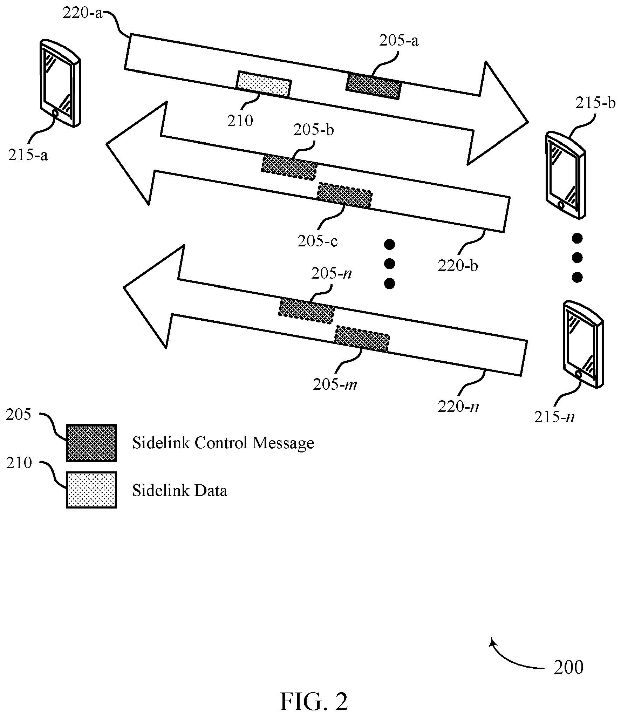

**FIG. 2** illustrates an example of a wireless communications system 200 that supports techniques for sidelink resource reservation in accordance with various aspects of the present disclosure. The wireless communications system 200 may implement aspects of the wireless communications system 100 or may be implemented by aspects of the wireless communications system 100. For example, the wireless communications system 200 may include UEs 215 which may be examples of a UE 115 described with reference to FIG. 1. In some examples, the wireless communications system 200 may support multiple RATs including 4G systems such as LTE systems, LTE-A systems, or LTE-A Pro systems, and 5G systems which may be referred to as NR systems. The wireless communications system 200 may support cross-carrier sidelink resource reservation to support improvements to channel congestion, reliability, data rates, spectral efficiency, latency, coordination between devices, power consumption, resource usage, battery life, and processing capability among other benefits.

The wireless communications system 200 may support sidelink communications between the UEs 215. For example, the wireless communications system 200 may include a UE 215-a, a UE 215-b, and, in some cases, one or more additional UEs 215 (e.g., up to a UE 215-*n*, where n is some positive integer). The UE 215-a may transmit and the UE 215-b may receive sidelink messages over a sidelink 220-a, and the UE 215-b may transmit and the UE 215-a may receive sidelink messages over a sidelink 220-b, which may be respective examples of a D2D communication link 135 (as shown in FIG. 1). Additionally, the UE 215-a may receive sidelink messages additional sidelinks 220 (e.g., a sidelink 220-n) from the one or more additional UEs 215 (e.g., the UE 215-*n*). In some examples, the wireless communications system 200 may be configured to operate according to the Mode 2 resource allocation mode.

The wireless communications system 200 may support sidelink communications between the UE 215-a, the UE 215-b, and the one or more additional UEs 215 over a licensed frequency spectrum band and an unlicensed frequency spectrum band; this may be referred to as sidelink carrier aggregation of licensed and unlicensed spectrums. For example, the UE 215-a and the UE 215-b may be configured to communicate using one or more licensed carriers in the licensed frequency spectrum band and using one or more unlicensed carriers in the unlicensed frequency spectrum band. In some examples, the licensed frequency spectrum band may have a limited bandwidth, and the UE 215-a and the UE 215-b may communicate over the unlicensed frequency spectrum band to support (e.g., supplement) communications over the licensed frequency spectrum band. For instance, in an example NR V2X deployment, the licensed frequency spectrum band may have a 10 MHz bandwidth, which may be insufficient to support some communications over the 10 MHz bandwidth (e.g., a 40 MHz bandwidth, or some other bandwidth may be needed to support the communications). The UE 215-a and the UE 215-b may implement or may be configured to implement carrier aggregation of licensed carriers and unlicensed carrier to provide additional resources and to support the NR V2X communications. However, communications using unlicensed carriers may experience relatively high and unpredictable levels of interference, thereby reducing a reliability of the communications.

To increase the reliability of communications over the unlicensed frequency spectrum band, the UE 215-a and the UE 215-b may implement cross-carrier reservation of sidelink resources. For example, the UE 215-a may determine one or more sidelink resources of one or more unlicensed carriers to use to transmit a sidelink message (e.g., sidelink data 210, sidelink control signaling, or both). The UE 215-a may transmit a sidelink control message 205-a (e.g., SCI) in a licensed carrier to one or more UEs 215 (e.g., the UE 215-b) to reserve the one or more sidelink resources of the one or more unlicensed carriers. In some examples, the UE 215-a may transmit the sidelink control message 205-a in a PSCCH, e.g., a standalone PSCCH. In some examples, the UE 215-a may transmit the sidelink control message 205-a in RRC signaling, a MAC-control element (MAC-CE), or a combination thereof, on a PSSCH.

By transmitting the sidelink control message 205-a in the licensed carrier, the UE 215-a may increase a reliability of the sidelink control message 205-a (e.g., compared to transmitting the sidelink control message 205-a in an unlicensed carrier to reserve the one or more sidelink resources). Accordingly, the UE 215-a may increase coordination between the UEs 215 by increasing a likelihood that the one or more UEs 215 (e.g., the UE 215-b) may successfully decode the sidelink control message 205-a and acknowledge (e.g., respect) the reservation. As a result, the UE 215-a may transmit the sidelink message (e.g., the sidelink data 210) in the one or more sidelink resources with a decreased likelihood that the one or more UEs 215 attempt to transmit sidelink messages using the one or more sidelink resources, thereby reducing interference and increasing a reliability of the sidelink message. In some examples, the UE 215-a may transmit the sidelink message on a PSSCH.

To determine the one or more sidelink resources of the one or more unlicensed carriers, the UE 215-a may receive and decode one or more sidelink control messages 205. For example, the UE 215-b may transmit and the UE 215-a may receive a sidelink control message 205-b in the licensed carrier, a sidelink control message 205-c in an unlicensed carrier, or both, to reserve sidelink resources. In some examples, the sidelink control message 205-b may reserve sidelink resources in one or both of the licensed carrier and the one or more unlicensed carriers. In some cases, the sidelink control message 205-c may reserve sidelink resources in the one or more unlicensed carriers. In some examples, the UE 215-a may receive additional sidelink control messages 205 in the licensed carrier (e.g., sidelink control message 205-n), the one or more unlicensed carriers (e.g., a sidelink control message 205-m), or both, from the one or more additional UEs 215 (e.g., UE 215-*n*) of the wireless communications system 200.

Based on the received sidelink control messages 205, the UE 215-a may determine a set of available sidelink resources of the one or more unlicensed carriers for transmission of the sidelink message. For example, the UE 215-a may decode the sidelink control message 205-b, the sidelink control message 205-c, the additional sidelink control messages 205, or a combination thereof, to determine which sidelink resources of the one or more unlicensed carriers are reserved, and therefore, may determine sidelink resources are available (e.g., the set of available sidelink resources). The UE 215-a may select the one or more sidelink resources for the transmission of the sidelink message from the set of available sidelink resources.

In some examples, the UE 215-a may determine the set of available sidelink resources based on respective RSRPs associated with the sidelink control message 205-b, the sidelink control message 205-c, the additional sidelink control messages 205, or a combination thereof. For example, if an RSRP of a respective sidelink control message 205 satisfies (e.g., is greater than, is greater than or equal to) a threshold RSRP, the UE 215-a may determine that the sidelink resources associated with the respective sidelink control message 205 are reserved. Alternatively, if the RSRP fails to satisfy (e.g., is less than, is less than or equal to) the threshold RSRP, the UE 215-a may determine that the sidelink resources associated with the respective sidelink control message 205 are available. That is, the UE 215-a may determine that sidelink resources reserved by the respective sidelink control message 205 are available if the associated RSRP fails to satisfy the threshold RSRP.

The UE 215-a may determine one or more sidelink resources of the licensed carrier to transmit the sidelink control message 205-a. For example, the UE 215-a may decode one or sidelink control messages 205 transmitted in the licensed carrier (e.g., the sidelink control message 205-b) by one or more UEs 215 (e.g., the UE 215-b) to determine a set of available sidelink resources of the licensed carrier for transmission of the sidelink control message 205-a. In some examples, the UE 215-a may determine the set of available sidelink resources of the licensed carrier based on respective RSRPs of the one or sidelink control messages 205 transmitted in the licensed carrier. In some cases, the UE 215-a may determine the one or more sidelink resources of the licensed carrier by randomly selecting the one or more sidelink resources of the licensed carrier from the determined set of available sidelink resources of the licensed carrier. In some other cases, the UE 215-a may determine the one or more sidelink resources of the licensed carrier by selecting the one or more earliest available sidelink resources in time of the determined set of available sidelink resources of the licensed carrier.

In an example, the UE 215-a may reserve the one or more sidelink resources of the licensed carrier to transmit the sidelink control message 205-a. For example, prior to transmitting the sidelink control message 205-a, the UE 215-a may transmit a sidelink control message 205 (not shown) in the licensed carrier that reserves the one or more sidelink resources of the licensed carrier.

In another example, the UE 215-a may transmit the sidelink control message 205-a using one or more unreserved sidelink resources of the licensed carrier. For example, the UE 215-a may determine the one or more sidelink resources of the licensed carrier and may transmit the sidelink control message 205-a using the one or more sidelink resources of the licensed carrier without reserving (e.g., without transmitting a sidelink control message 205 that reserves) the one or more sidelink resources of the licensed carrier.

The UE 215-a may perform a channel access procedure prior to transmitting the sidelink message (e.g., the sidelink data 210) to ensure that the one or more reserved sidelink resources of the one or more unlicensed carriers are available. For example, the unlicensed frequency spectrum band may be shared by communication devices associated with RATs different from a RAT associated with the UE 215-a and the UE 215-b. In some examples, such communication devices may not decode the sidelink control message 205-a and thus, may not respect the reservation of the one or more sidelink resources of the one or more unlicensed carriers. As a result, the communication devices may attempt to transmit messages using the one or more sidelink resources of the one or more unlicensed carriers. Accordingly, the UE 215-a may perform the channel access procedure (an LBT procedure, a CCA procedure, or some other contention-based access procedure) to determine whether the one or more sidelink resources of the one or more unlicensed carriers are available. In some examples, if the channel access procedure is successful (i.e., the one or more sidelink resources are available), the UE 215-a may transmit the sidelink message using the one or more sidelink resources of the one or more unlicensed carriers. Alternatively, in some cases, if the channel access procedure is unsuccessful (i.e., the one or more sidelink resources are unavailable), the UE 215-a may refrain from transmitting the sidelink message in the one or sidelink resources (e.g., to reduce interference over the one or more unlicensed carriers).

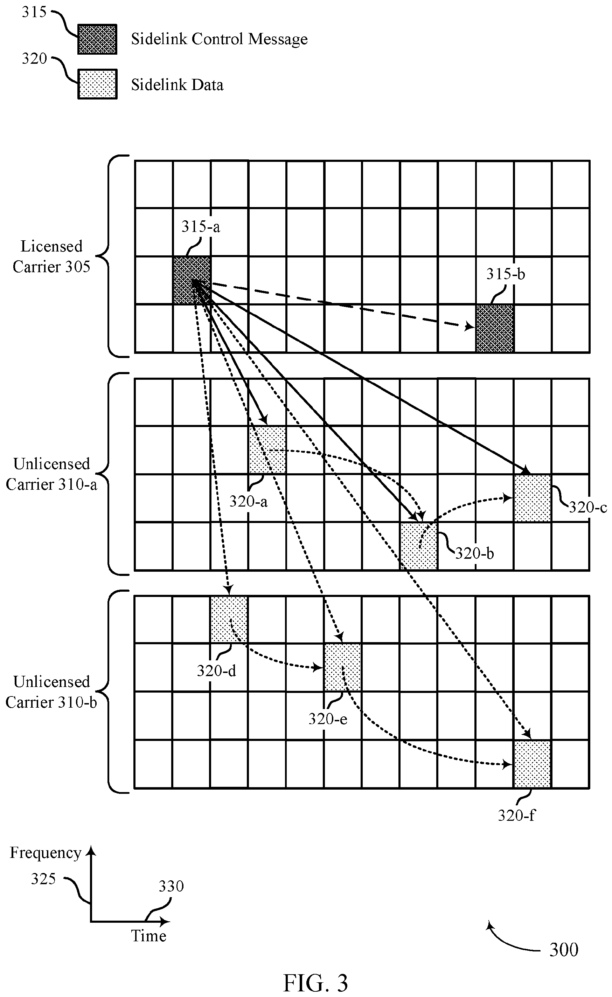

**FIG. 3** illustrates an example of a carrier scheme 300 that supports techniques for sidelink resource reservation in accordance with various aspects of the present disclosure. The carrier scheme may implement aspects of the wireless communications systems 100 and 200 or may be implemented by aspects of the wireless communications system 100 and 200 as described with reference to FIGs. 1 and 2, respectively. For example, the carrier scheme 300 may be implemented by one or more UEs 115 to support cross-carrier sidelink reservation which may provide improvements to channel congestion, reliability, data rates, spectral efficiency, latency, coordination between devices, power consumption, resource usage, battery life, and processing capability among other benefits.

The carrier scheme 300 depicts a licensed carrier 305, an unlicensed carrier 310-a, and an unlicensed carrier 310-b. The licensed carrier 305, the unlicensed carrier 310-a, and the unlicensed carrier 310-b may each have an associated bandwidth and be configured for a duration of time. For example, the licensed carrier 305, the unlicensed carrier 310-a, and the unlicensed carrier 310-b may each span a portion of frequency 325 and time 330. Additionally, the licensed carrier 305, the unlicensed carrier 310-a, and the unlicensed carrier 310-b may each include a set of sidelink resources which may be examples of sidelink resource pools described herein. In some examples, the licensed carrier 305, the unlicensed carrier 310-a, and the unlicensed carrier 310-b may be aggregated to support sidelink communications over a licensed frequency spectrum band and an unlicensed frequency spectrum band.

The carrier scheme 300 depicts various examples of how a cross-carrier sidelink reservation scheme may be implemented by the one or more UEs 115. For example, a UE 115 may determine one or more sidelink resources of the unlicensed carrier 310-a, the unlicensed carrier 310-b, or both, for transmission of sidelink data 320. To reserve the one or more sidelink resources of the unlicensed carrier 310-a, the unlicensed carrier 310-b, or both, the UE 115 may transmit a sidelink control message 315-a in the licensed carrier 305.

The sidelink control message 315-a may reserve sidelink resources of the unlicensed carrier 310-a, the unlicensed carrier 310-b, or both, for multiple transmissions of sidelink data 320. For example, the sidelink control message 315-a may reserve sidelink resources of the unlicensed carrier 310-a for transmission of sidelink data 320-a, sidelink data 320-b, sidelink data 320-c, or a combination thereof. Additionally, or alternatively, the sidelink control message 315-a may reserve sidelink resources of the unlicensed carrier 310-b for transmission of sidelink data 320-d, sidelink data 320-e, sidelink data 320-f, or a combination thereof. In some examples, the sidelink control message 315-a may additionally reserve one or more sidelink resources of the licensed carrier 305 for transmission of additional sidelink control messages 315 in the licensed carrier 305. For example, the sidelink control message 315-a may reserve sidelink resources of the licensed carrier 305 to transmit a sidelink control message 315-b.

The unlicensed carrier 310-a and the unlicensed carrier 310-b may each be associated with an index used to identify the respective unlicensed carrier 310. For example, the unlicensed carrier 310-a may have a corresponding first index and the unlicensed carrier 310-b may have a corresponding second index. In some examples, the sidelink control message 315-a may additionally include or indicate the first index, the second index, or both, to indicate the unlicensed carriers 310 in which the sidelink control message 315-a reserves sidelink resources. For example, if the sidelink control message 315-a reserves one or more sidelink resources of the unlicensed carrier 310-a, the unlicensed carrier 310-b, or both, the sidelink control message 315-a may include or indicate the first index, the second index, or both, to indicate that the sidelink control message 315-a reserves sidelink resources in the unlicensed carrier 310-a, the unlicensed carrier 310-b, or both.

The UE 115 may transmit the sidelink data 320 using the reserved sidelink resources of the unlicensed carrier 310-a, the unlicensed carrier 310-b, or both. For example, the UE 115 may transmit the sidelink data 320-a, the sidelink data 320-b, the sidelink data 320-c, or a combination thereof, in the unlicensed carrier 310-a using the corresponding sidelink resources reserved by the sidelink control message 315-a. Additionally, or alternatively, the UE 115 may transmit the sidelink data 320-d, the sidelink data 320-e, the sidelink data 320-f, or a combination thereof, in the unlicensed carrier 310-b using the corresponding sidelink resources reserved by the sidelink control message 315-a. In some examples, the UE 115 may perform a channel access procedure before transmitting sidelink data 320 to ensure that the sidelink resources are available. In some examples, the channel access procedure may be a type 1 channel access procedure, such as a CAT-4 LBT procedure or some other type 1 channel access procedure, or a type 2 channel access procedure, such as a 2a, 2b, 2c, CAT-1, or CAT-2 LBT procedure or some other type 2 channel access procedure. In some cases, the type 1 channel access procedure and the type 2 channel access procedure may be examples of NR channel access procedures.

In some examples, the UE 115 may transmit sidelink control messages in the sidelink resources reserved by the sidelink control message 315-a. For example, the UE 115 may transmit a sidelink control message with or instead of the sidelink data 320-a, the sidelink data 320-b, the sidelink data 320-c, the sidelink data 320-d, the sidelink data 320-e, the sidelink data 320-f, or a combination thereof. The UE 115 may transmit the one more sidelink control messages to additionally (e.g., redundantly) reserve sidelink resources in the unlicensed carrier 310-a, the unlicensed carrier 310-b, or both. For example, the UE 115 may transmit a sidelink control message with or instead of: the sidelink data 320-a to reserve sidelink resources associated with the sidelink data 320-b, the sidelink data 320-b to reserve sidelink resources associated with the sidelink data 320-c, the sidelink data 320-d to reserve sidelink resources associated with the sidelink data 320-e, the sidelink data 320-e to reserve sidelink resources associated with the sidelink data 320-f, or a combination thereof.

It is noted that for illustrative purposes, FIG. 3 depicts two unlicensed carriers 310. However, the cross-carrier sidelink reservation scheme may be adapted and applied to reserve sidelink resources across any quantity of unlicensed carriers 310 (e.g., one, two, three, four, five, ten, twenty, etc.). Additionally, or alternatively, the cross-carrier sidelink reservation scheme may be adapted and applied to reserve sidelink resources in one or more secondary carriers by transmitting sidelink control messages in a primary carrier to reserve the sidelink resources in the one or more secondary carriers, where the primary carrier and the one or more secondary carriers are associated with the licensed frequency spectrum band.

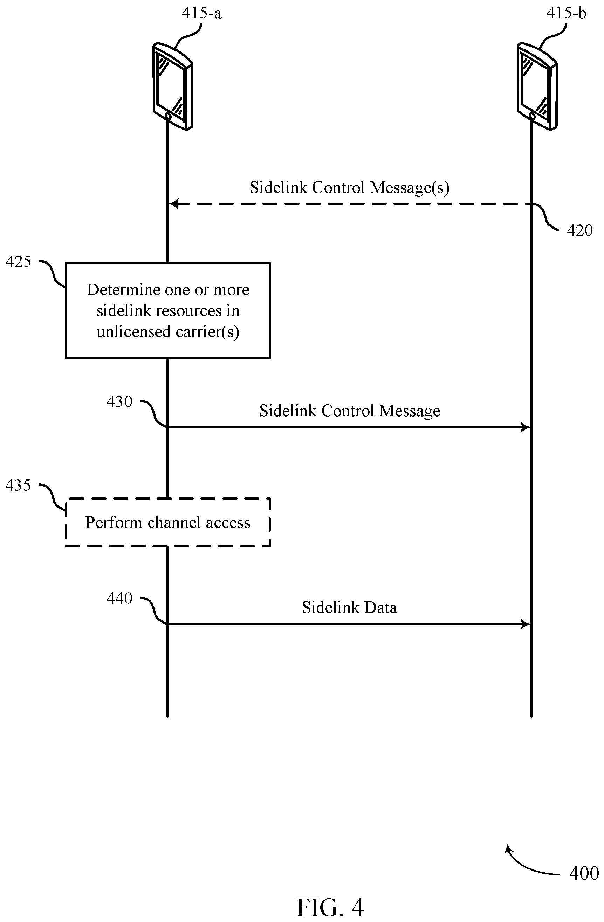

**FIG.** 4 illustrates an example of a process flow 400 that supports techniques for sidelink resource reservation in accordance with various aspects of the present disclosure. The process flow 400 may implement aspects of the wireless communications systems 100 and 200 or may be implemented by aspects of the wireless communications system 100 and 200 as described with reference to FIGs. 1 and 2, respectively. For example, the process flow 400 may be implemented by a UE 415-a and a UE 415-b to support cross-carrier sidelink resource reservation to reduce channel congestion and increase reliability of sidelink communications. The process flow 400 may further be implemented by the UE 415-a and the UE 415-b to provide improvements to data rates, spectral efficiency, coordination between devices, power consumption, resource usage, battery life, and processing capability among other benefits.

The UE 415-a and the UE 415-b may be examples of a UE 115, as described with reference to FIGs. 1 and 2. In the following description of the process flow 400, the operations may be performed in different orders or at different times. Some operations may also be omitted from the process flow 400, and other operations may be added to the process flow 400.

At 420, the UE 415-a may receive one or more sidelink control messages. For example, the UE 415-b may transmit one or more sidelink control messages in one or both of a licensed frequency spectrum band and an unlicensed frequency spectrum band. The UE 415-b may transmit the one or more sidelink control messages to reserve sidelink resources in one or more unlicensed carriers in the unlicensed frequency spectrum band. In some examples, the UE 415-a may receive additional sidelink control messages in one or both the licensed frequency spectrum band and the unlicensed frequency spectrum band from other UEs 415 (not shown).

At 425, the UE 415-a may determine one or more sidelink resources in the one or more unlicensed carriers for transmission of a sidelink message (e.g., sidelink data, sidelink control signaling, etc.). For example, the UE 415-a may decode the received sidelink control messages to determine a set of available sidelink resources of the one or more unlicensed carriers. The UE 415-a may select the one or more sidelink resources from the set of available sidelink resources.

At 430, the UE 415-a may transmit a sidelink control message in a licensed carrier of the licensed frequency spectrum band to reserve the one or more sidelink resources in the one or more unlicensed carriers. In some examples, the UE 415-a may determine a set of available sidelink resources of the licensed carrier by decoding one or more sidelink control messages transmitted in the licensed carrier and may select one or more sidelink resources of the set of available sidelink resources of the licensed carrier to transmit the sidelink control message.

At 435, the UE 415-a may optionally perform a channel access procedure to ensure that the one or more sidelink resources of the one or more unlicensed carriers are available for transmission of the sidelink message.

At 440, the UE 415-a may transmit the sidelink message using the one or more sidelink resources of the one or more unlicensed carriers reserved by the sidelink control message. In some examples, the UE 415-a may transmit the sidelink message based on the channel access procedure. For example, if the channel access procedure is successful, the UE 415-a may transmit the sidelink message. Alternatively, in some cases, if the channel access procedure is unsuccessful, the UE 415-a may refrain from transmitting the sidelink message.

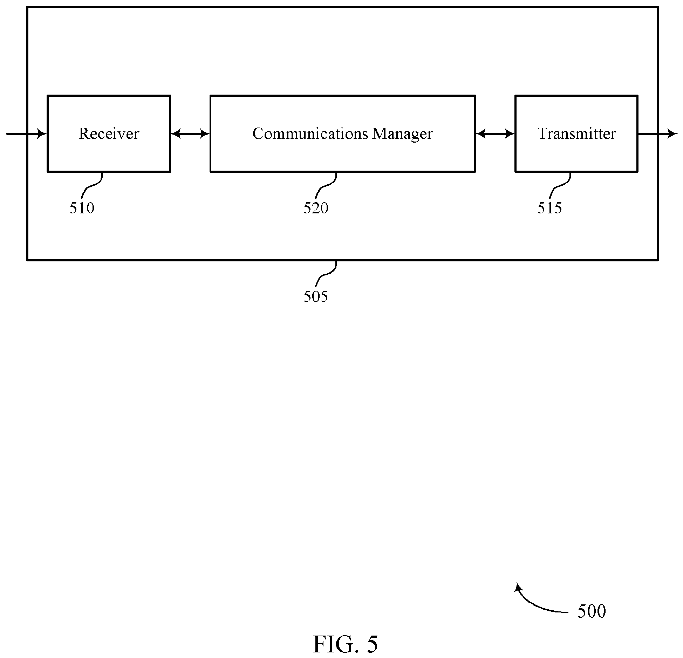

**FIG. 5** shows a block diagram 500 of a device 505 that supports techniques for sidelink resource reservation in accordance with various aspects of the present disclosure. The device 505 may be an example of aspects of a UE 115 as described herein. The device 505 may include a receiver 510, a transmitter 515, and a communications manager 520. The device 505 may also include a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to techniques for sidelink resource reservation). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to techniques for sidelink resource reservation). In some examples, the transmitter 515 may be co-located with a receiver 510 in a transceiver component. The transmitter 515 may utilize a single antenna or a set of multiple antennas.

The communications manager 520, the receiver 510, the transmitter 515, or various combinations thereof or various components thereof may be examples of means for performing various aspects of techniques for sidelink resource reservation as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communication at a UE in accordance with examples as disclosed herein. For example, the communications manager 520 may be configured as or otherwise support a means for determining, by the UE, one or more sidelink resources for transmission of sidelink data in a first carrier in an unlicensed frequency spectrum band. The communications manager 520 may be configured as or otherwise support a means for transmitting, by the UE, sidelink control signaling in a second carrier in a licensed frequency spectrum band to reserve the one or more sidelink resources of the first carrier in the unlicensed frequency spectrum band. The communications manager 520 may be configured as or otherwise support a means for transmitting the sidelink data in the one or more sidelink resources of the first carrier in the unlicensed frequency spectrum band based on transmitting the sidelink control signaling.

By including or configuring the communications manager 520 in accordance with examples as described herein, the device 505 (e.g., a processor controlling or otherwise coupled to the receiver 510, the transmitter 515, the communications manager 520, or a combination thereof) may support techniques for reduced power consumption and more efficient utilization of communication resources by supporting the reservation of sidelink resources in an unlicensed frequency spectrum band using sidelink control signaling transmitted in a licensed frequency spectrum band, thereby increasing reliability of sidelink communications and reducing retransmissions.

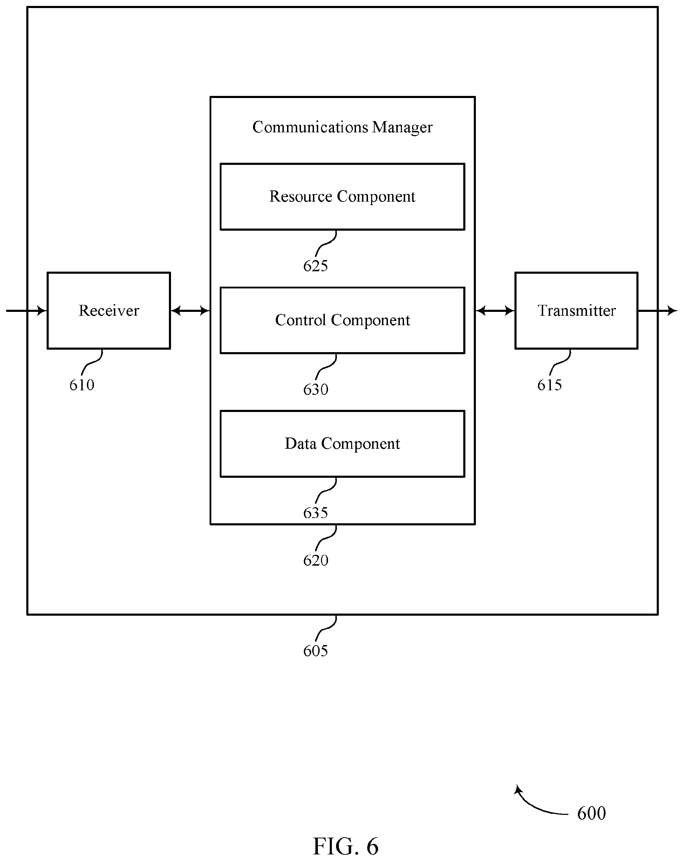

**FIG. 6** shows a block diagram 600 of a device 605 that supports techniques for sidelink resource reservation in accordance with various aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to techniques for sidelink resource reservation). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to techniques for sidelink resource reservation). In some examples, the transmitter 615 may be co-located with a receiver 610 in a transceiver component. The transmitter 615 may utilize a single antenna or a set of multiple antennas.

The device 605, or various components thereof, may be an example of means for performing various aspects of techniques for sidelink resource reservation as described herein. For example, the communications manager 620 may include a resource component 625, a control component 630, a data component 635, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communication at a UE in accordance with examples as disclosed herein. The resource component 625 may be configured as or otherwise support a means for determining, by the UE, one or more sidelink resources for transmission of sidelink data in a first carrier in an unlicensed frequency spectrum band. The control component 630 may be configured as or otherwise support a means for transmitting, by the UE, sidelink control signaling in a second carrier in a licensed frequency spectrum band to reserve the one or more sidelink resources of the first carrier in the unlicensed frequency spectrum band. The data component 635 may be configured as or otherwise support a means for transmitting the sidelink data in the one or more sidelink resources of the first carrier in the unlicensed frequency spectrum band based on transmitting the sidelink control signaling.

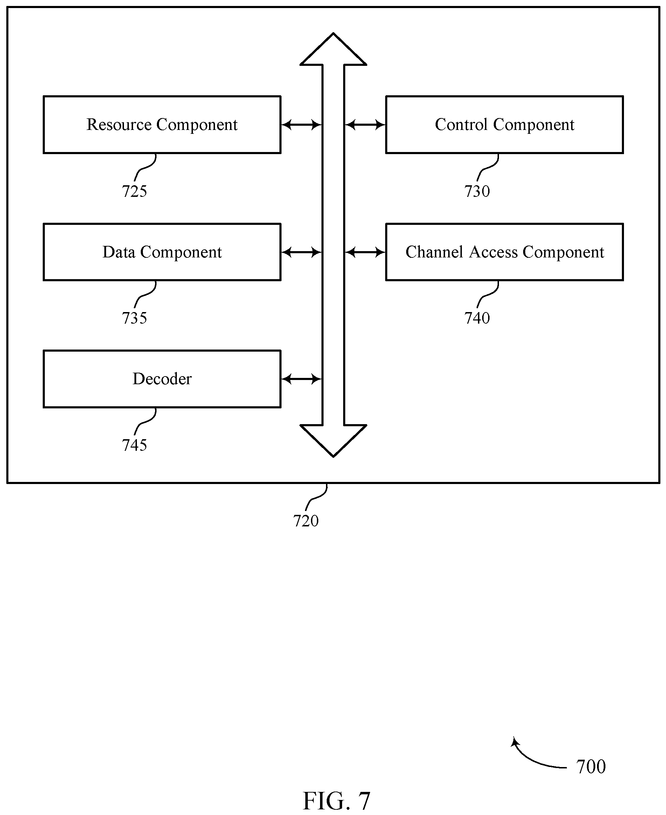

**FIG. 7** shows a block diagram 700 of a communications manager 720 that supports techniques for sidelink resource reservation in accordance with various aspects of the present disclosure. The communications manager 720 may be an example of aspects of a communications manager 520, a communications manager 620, or both, as described herein. The communications manager 720, or various components thereof, may be an example of means for performing various aspects of techniques for sidelink resource reservation as described herein. For example, the communications manager 720 may include a resource component 725, a control component 730, a data component 735, a channel access component 740, a decoder 745, or any combination thereof. Each of these components may communicate, directly or indirectly, with one another (e.g., via one or more buses).

The communications manager 720 may support wireless communication at a UE in accordance with examples as disclosed herein. The resource component 725 may be configured as or otherwise support a means for determining, by the UE, one or more sidelink resources for transmission of sidelink data in a first carrier in an unlicensed frequency spectrum band. The control component 730 may be configured as or otherwise support a means for transmitting, by the UE, sidelink control signaling in a second carrier in a licensed frequency spectrum band to reserve the one or more sidelink resources of the first carrier in the unlicensed frequency spectrum band. The data component 735 may be configured as or otherwise support a means for transmitting the sidelink data in the one or more sidelink resources of the first carrier in the unlicensed frequency spectrum band based on transmitting the sidelink control signaling.

In some examples, the channel access component 740 may be configured as or otherwise support a means for performing, prior to transmitting the sidelink data, a channel access procedure associated with the one or more sidelink resources of the first carrier, where transmitting the sidelink data is based on performing the channel access procedure.

In some examples, the decoder 745 may be configured as or otherwise support a means for decoding one or more sidelink control messages transmitted in the licensed frequency spectrum band to determine a set of available sidelink resources for transmission of the sidelink data that includes the one or more sidelink resources of the first carrier in the unlicensed frequency spectrum band, where determining the one or more sidelink resources of the first carrier in the unlicensed frequency spectrum band is based on decoding the one or more sidelink control messages transmitted in the licensed frequency spectrum band.

In some examples, the decoder 745 may be configured as or otherwise support a means for decoding one or more sidelink control messages transmitted in the unlicensed frequency spectrum band to determine a set of available sidelink resources for transmission of the sidelink data that includes the one or more sidelink resources of the first carrier in the unlicensed frequency spectrum band, where determining the one or more sidelink resources of the first carrier in the unlicensed frequency spectrum band is based on decoding the one or more sidelink control messages transmitted in the unlicensed frequency spectrum band.

In some examples, the resource component 725 may be configured as or otherwise support a means for determining a set of available sidelink resources for transmission of the sidelink data that includes the one or more sidelink resources of the first carrier in the unlicensed frequency spectrum band based on respective reference signal received powers associated with one or more sidelink control messages used to reserve sidelink resources in the first carrier in the unlicensed frequency spectrum band.

In some examples, the resource component 725 may be configured as or otherwise support a means for determining that a sidelink resource of the first carrier in the unlicensed frequency spectrum band is available based on a reference signal received power associated with a sidelink control message that reserves the sidelink resource satisfying a threshold power.

In some examples, the control component 730 may be configured as or otherwise support a means for transmitting second control signaling in the one or more sidelink resources of the first carrier in the unlicensed frequency spectrum band to reserve one or more sidelink resources for transmission of second sidelink data in the first carrier in the unlicensed frequency spectrum band.

In some examples, the resource component 725 may be configured as or otherwise support a means for reserving one or more sidelink resources of the second carrier in the licensed frequency spectrum band for transmission of the sidelink control signaling. In some examples, to support transmitting the sidelink control signaling, the control component 730 may be configured as or otherwise support a means for transmitting the sidelink control signaling using the one or more sidelink resources of the second carrier.

In some examples, to support reserving the one or more sidelink resources in of the second carrier in the licensed frequency spectrum band, the resource component 725 may be configured as or otherwise support a means for randomly selecting the one or more sidelink resources of the second carrier in the licensed frequency spectrum band from a set of available sidelink resources of the second carrier in the licensed frequency spectrum band.

In some examples, to support reserving the one or more sidelink resources in of the second carrier in the licensed frequency spectrum band, the resource component 725 may be configured as or otherwise support a means for selecting an earliest available sidelink resource in time of a set of available sidelink resources of the second carrier in the licensed frequency spectrum band.

In some examples, to support transmitting the sidelink control signaling, the control component 730 may be configured as or otherwise support a means for transmitting the sidelink control signaling in one or more unreserved sidelink resources of the second carrier in the licensed frequency spectrum band.

In some examples, the resource component 725 may be configured as or otherwise support a means for determining, by the UE, one or more sidelink resources for transmission of the sidelink data in a third carrier in the unlicensed frequency spectrum band, where the sidelink control signaling reserves the one or more sidelink resources in the third carrier in the unlicensed frequency spectrum band. In some examples, the data component 735 may be configured as or otherwise support a means for transmitting the sidelink data in the one or more sidelink resources of the third carrier in the unlicensed frequency spectrum band.

In some examples, the sidelink control signaling indicates a first index corresponding to the first carrier in the unlicensed frequency spectrum band and a second index corresponding to the third carrier in the unlicensed frequency spectrum band.

In some examples, the sidelink control signaling further reserves one or more sidelink resources for transmission of second sidelink data in the first carrier in the unlicensed frequency spectrum band.

In some examples, the sidelink control signaling further reserves one or more sidelink resources for transmission of second control signaling in the second carrier in the licensed frequency spectrum band.

In some examples, the sidelink control signaling is an SCI message transmitted in a PSCCH.

In some examples, the sidelink control signaling includes a MAC-CE, RRC signaling, or a combination thereof, transmitted in a PSSCH.

In some examples, the sidelink data is transmitted on a PSSCH.

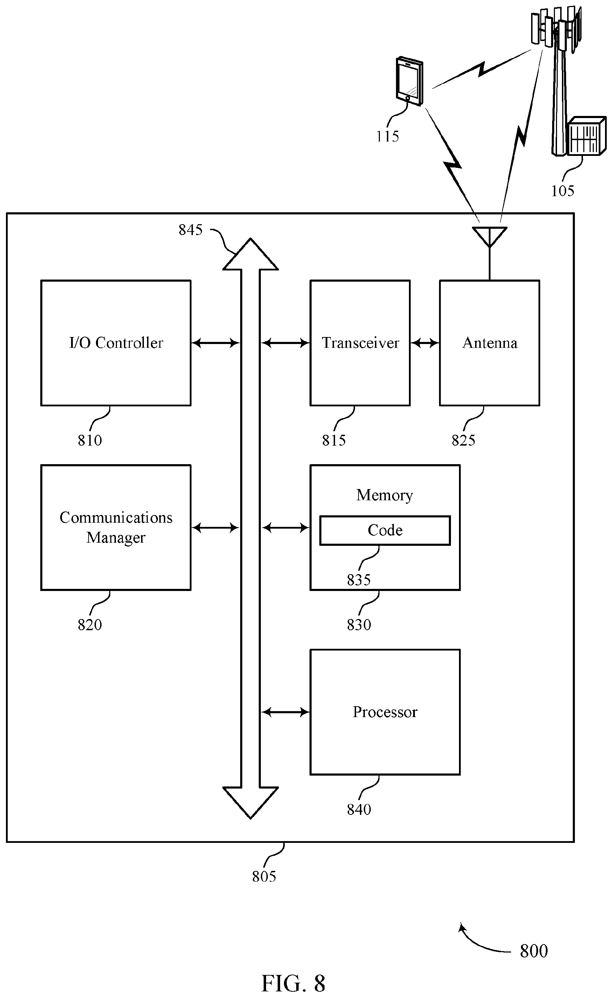

**FIG. 8** shows a diagram of a system 800 including a device 805 that supports techniques for sidelink resource reservation in accordance with various aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may be capable of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting techniques for sidelink resource reservation). For example, the device 805 or a component of the device 805 may include a processor 840 and memory 830 coupled to the processor 840, the processor 840 and memory 830 configured to perform various functions described herein.

The communications manager 820 may support wireless communication at a UE in accordance with examples as disclosed herein. For example, the communications manager 820 may be configured as or otherwise support a means for determining, by the UE, one or more sidelink resources for transmission of sidelink data in a first carrier in an unlicensed frequency spectrum band. The communications manager 820 may be configured as or otherwise support a means for transmitting, by the UE, sidelink control signaling in a second carrier in a licensed frequency spectrum band to reserve the one or more sidelink resources of the first carrier in the unlicensed frequency spectrum band. The communications manager 820 may be configured as or otherwise support a means for transmitting the sidelink data in the one or more sidelink resources of the first carrier in the unlicensed frequency spectrum band based on transmitting the sidelink control signaling.

By including or configuring the communications manager 820 in accordance with examples as described herein, the device 805 may support techniques for improved data rates, spectral efficiency, channel congestion, reliability, latency, coordination between devices, power consumption, resource usage, battery life, and processing capability among other benefits.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of techniques for sidelink resource reservation as described herein, or the processor 840 and the memory 830 may be otherwise configured to perform or support such operations.

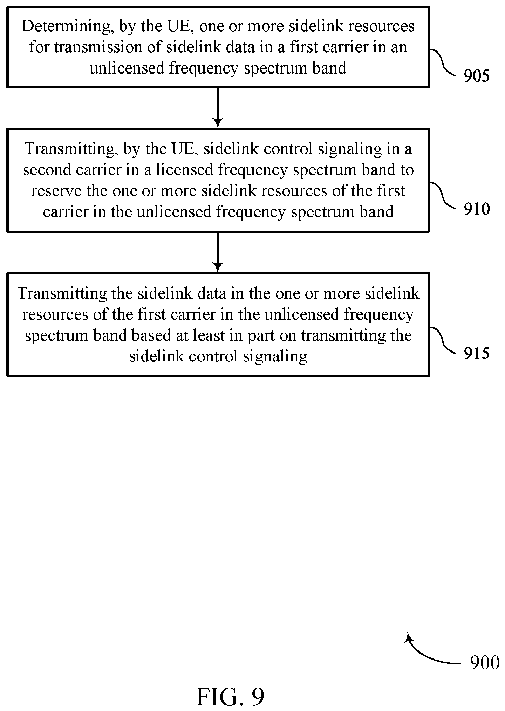

**FIG. 9** shows a flowchart illustrating a method 900 that supports techniques for sidelink resource reservation in accordance with various aspects of the present disclosure. The operations of the method 900 may be implemented by a UE or its components as described herein. For example, the operations of the method 900 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 905, the method may include determining, by the UE, one or more sidelink resources for transmission of sidelink data in a first carrier in an unlicensed frequency spectrum band. The operations of 905 may be performed in accordance with examples as disclosed herein. In some examples, aspects of the operations of 905 may be performed by a resource component 725 as described with reference to FIG. 7.

At 910, the method may include transmitting, by the UE, sidelink control signaling in a second carrier in a licensed frequency spectrum band to reserve the one or more sidelink resources of the first carrier in the unlicensed frequency spectrum band. The operations of 910 may be performed in accordance with examples as disclosed herein. In some examples, aspects of the operations of 910 may be performed by a control component 730 as described with reference to FIG. 7.

At 915, the method may include transmitting the sidelink data in the one or more sidelink resources of the first carrier in the unlicensed frequency spectrum band based on transmitting the sidelink control signaling. The operations of 915 may be performed in accordance with examples as disclosed herein. In some examples, aspects of the operations of 915 may be performed by a data component 735 as described with reference to FIG. 7.

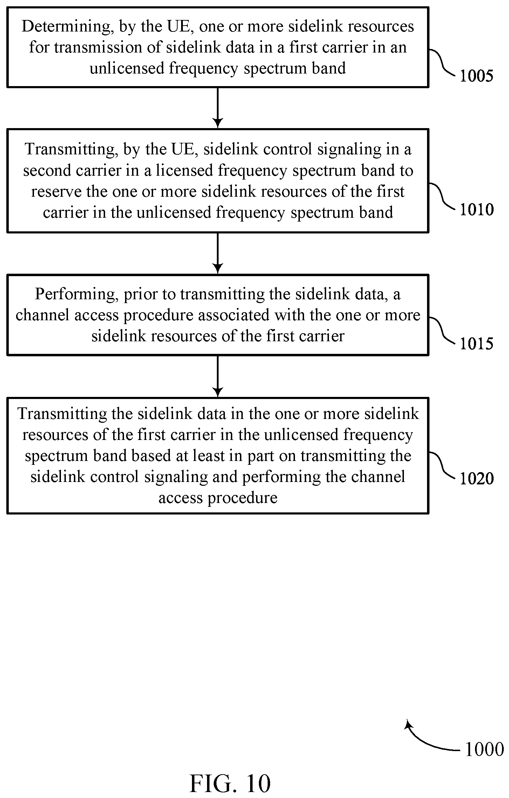

**FIG. 10** shows a flowchart illustrating a method 1000 that supports techniques for sidelink resource reservation in accordance with various aspects of the present disclosure. The operations of the method 1000 may be implemented by a UE or its components as described herein. For example, the operations of the method 1000 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1005, the method may include determining, by the UE, one or more sidelink resources for transmission of sidelink data in a first carrier in an unlicensed frequency spectrum band. The operations of 1005 may be performed in accordance with examples as disclosed herein. In some examples, aspects of the operations of 1005 may be performed by a resource component 725 as described with reference to FIG. 7.

At 1010, the method may include transmitting, by the UE, sidelink control signaling in a second carrier in a licensed frequency spectrum band to reserve the one or more sidelink resources of the first carrier in the unlicensed frequency spectrum band. The operations of 1010 may be performed in accordance with examples as disclosed herein. In some examples, aspects of the operations of 1010 may be performed by a control component 730 as described with reference to FIG. 7.

At 1015, the method may include performing, prior to transmitting the sidelink data, a channel access procedure associated with the one or more sidelink resources of the first carrier. The operations of 1015 may be performed in accordance with examples as disclosed herein. In some examples, aspects of the operations of 1015 may be performed by a channel access component 740 as described with reference to FIG. 7.

At 1020, the method may include transmitting the sidelink data in the one or more sidelink resources of the first carrier in the unlicensed frequency spectrum band based on transmitting the sidelink control signaling and performing the channel access procedure. The operations of 1020 may be performed in accordance with examples as disclosed herein. In some examples, aspects of the operations of 1020 may be performed by a data component 735 as described with reference to FIG. 7.

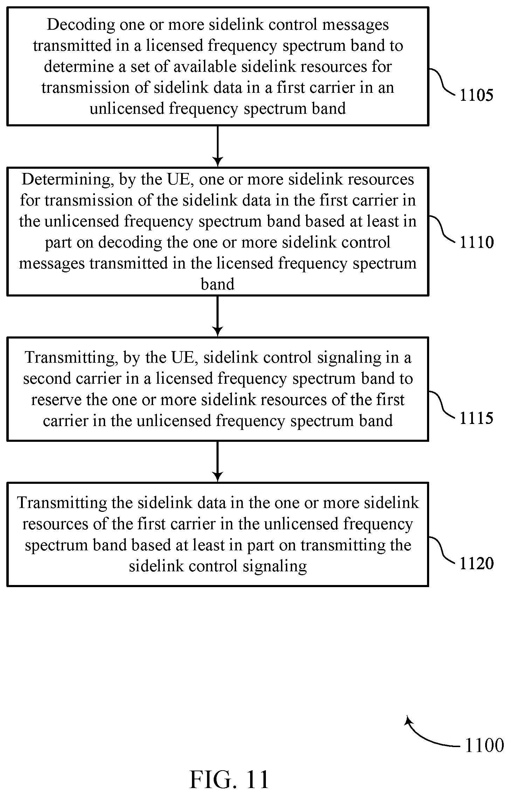

**FIG. 11** shows a flowchart illustrating a method 1100 that supports techniques for sidelink resource reservation in accordance with various aspects of the present disclosure. The operations of the method 1100 may be implemented by a UE or its components as described herein. For example, the operations of the method 1100 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1105, the method may include decoding one or more sidelink control messages transmitted in a licensed frequency spectrum band to determine a set of available sidelink resources for transmission of sidelink data in a first carrier in an unlicensed frequency spectrum band. The operations of 1105 may be performed in accordance with examples as disclosed herein. In some examples, aspects of the operations of 1105 may be performed by a decoder 745 as described with reference to FIG. 7.

At 1110, the method may include determining, by the UE, one or more sidelink resources for transmission of the sidelink data in the first carrier in the unlicensed frequency spectrum band based at least in part on decoding the one or more sidelink control messages transmitted in the licensed frequency spectrum band. The operations of 1110 may be performed in accordance with examples as disclosed herein. In some examples, aspects of the operations of 1110 may be performed by a resource component 725 as described with reference to FIG. 7.

At 1115, the method may include transmitting, by the UE, sidelink control signaling in a second carrier in a licensed frequency spectrum band to reserve the one or more sidelink resources of the first carrier in the unlicensed frequency spectrum band. The operations of 1115 may be performed in accordance with examples as disclosed herein. In some examples, aspects of the operations of 1115 may be performed by a control component 730 as described with reference to FIG. 7.

At 1120, the method may include transmitting the sidelink data in the one or more sidelink resources of the first carrier in the unlicensed frequency spectrum band based on transmitting the sidelink control signaling. The operations of 1120 may be performed in accordance with examples as disclosed herein. In some examples, aspects of the operations of 1120 may be performed by a data component 735 as described with reference to FIG. 7.

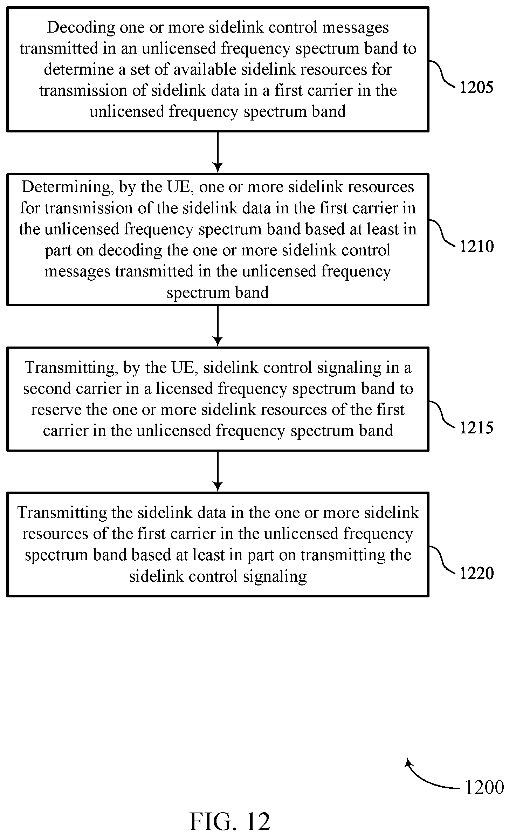

**FIG. 12** shows a flowchart illustrating a method 1200 that supports techniques for sidelink resource reservation in accordance with various aspects of the present disclosure. The operations of the method 1200 may be implemented by a UE or its components as described herein. For example, the operations of the method 1200 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1205, the method may include decoding one or more sidelink control messages transmitted in an unlicensed frequency spectrum band to determine a set of available sidelink resources for transmission of sidelink data in a first carrier in the unlicensed frequency spectrum band. The operations of 1205 may be performed in accordance with examples as disclosed herein. In some examples, aspects of the operations of 1205 may be performed by a decoder 745 as described with reference to FIG. 7.

At 1210, the method may include determining, by the UE, one or more sidelink resources for transmission of the sidelink data in the first carrier in the unlicensed frequency spectrum band based at least in part on decoding the one or more sidelink control messages transmitted in the unlicensed frequency spectrum band. The operations of 1210 may be performed in accordance with examples as disclosed herein. In some examples, aspects of the operations of 1210 may be performed by a resource component 725 as described with reference to FIG. 7.

At 1215, the method may include transmitting, by the UE, sidelink control signaling in a second carrier in a licensed frequency spectrum band to reserve the one or more sidelink resources of the first carrier in the unlicensed frequency spectrum band. The operations of 1215 may be performed in accordance with examples as disclosed herein. In some examples, aspects of the operations of 1215 may be performed by a control component 730 as described with reference to FIG. 7.

At 1220, the method may include transmitting the sidelink data in the one or more sidelink resources of the first carrier in the unlicensed frequency spectrum band based on transmitting the sidelink control signaling. The operations of 1220 may be performed in accordance with examples as disclosed herein. In some examples, aspects of the operations of 1220 may be performed by a data component 735 as described with reference to FIG. 7.

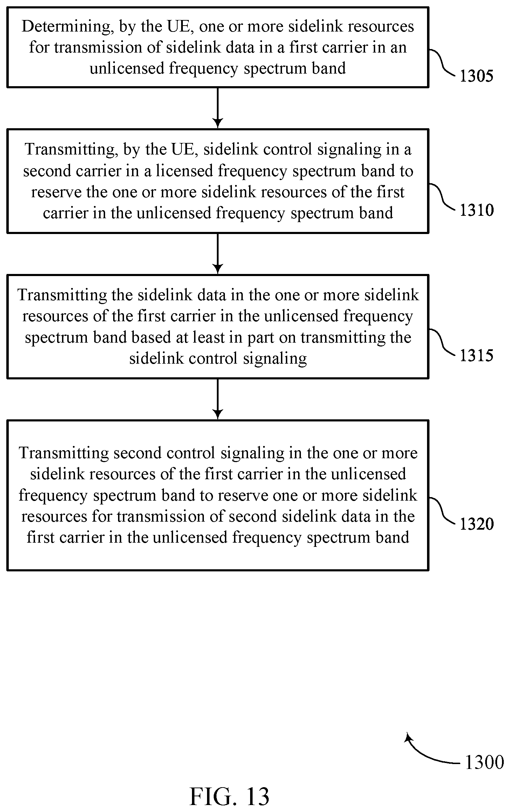

**FIG. 13** shows a flowchart illustrating a method 1300 that supports techniques for sidelink resource reservation in accordance with various aspects of the present disclosure. The operations of the method 1300 may be implemented by a UE or its components as described herein. For example, the operations of the method 1300 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1305, the method may include determining, by the UE, one or more sidelink resources for transmission of sidelink data in a first carrier in an unlicensed frequency spectrum band. The operations of 1305 may be performed in accordance with examples as disclosed herein. In some examples, aspects of the operations of 1305 may be performed by a resource component 725 as described with reference to FIG. 7.

At 1310, the method may include transmitting, by the UE, sidelink control signaling in a second carrier in a licensed frequency spectrum band to reserve the one or more sidelink resources of the first carrier in the unlicensed frequency spectrum band. The operations of 1310 may be performed in accordance with examples as disclosed herein. In some examples, aspects of the operations of 1310 may be performed by a control component 730 as described with reference to FIG. 7.

At 1315, the method may include transmitting the sidelink data in the one or more sidelink resources of the first carrier in the unlicensed frequency spectrum band based on transmitting the sidelink control signaling. The operations of 1315 may be performed in accordance with examples as disclosed herein. In some examples, aspects of the operations of 1315 may be performed by a data component 735 as described with reference to FIG. 7.

At 1320, the method may include transmitting second control signaling in the one or more sidelink resources of the first carrier in the unlicensed frequency spectrum band to reserve one or more sidelink resources for transmission of second sidelink data in the first carrier in the unlicensed frequency spectrum band. The operations of 1320 may be performed in accordance with examples as disclosed herein. In some examples, aspects of the operations of 1320 may be performed by a control component 730 as described with reference to FIG. 7.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the claims.

## Claims

1. A method for wireless communication at a user equipment, UE, comprising:
determining (1305), by the UE, one or more sidelink resources for transmission of sidelink data in a first carrier in an unlicensed frequency spectrum band;
transmitting (1310), by the UE, sidelink control signaling in a second carrier in a licensed frequency spectrum band to reserve the one or more sidelink resources of the first carrier in the unlicensed frequency spectrum band;
transmitting (1315) the sidelink data in the one or more sidelink resources of the first carrier in the unlicensed frequency spectrum band based at least in part on transmitting the sidelink control signaling; and
transmitting (1320) second control signaling in the one or more sidelink resources of the first carrier in the unlicensed frequency spectrum band to reserve one or more sidelink resources for transmission of second sidelink data in the first carrier in the unlicensed frequency spectrum band.

2. The method of claim 1, further comprising:
performing, prior to transmitting the sidelink data, a channel access procedure associated with the one or more sidelink resources of the first carrier, wherein transmitting the sidelink data is based at least in part on performing the channel access procedure.

3. The method of claim 1, further comprising:
decoding one or more sidelink control messages transmitted in the licensed frequency spectrum band to determine a set of available sidelink resources for transmission of the sidelink data that includes the one or more sidelink resources of the first carrier in the unlicensed frequency spectrum band, wherein determining the one or more sidelink resources of the first carrier in the unlicensed frequency spectrum band is based at least in part on decoding the one or more sidelink control messages transmitted in the licensed frequency spectrum band.

4. The method of claim 1, further comprising:
decoding one or more sidelink control messages transmitted in the unlicensed frequency spectrum band to determine a set of available sidelink resources for transmission of the sidelink data that includes the one or more sidelink resources of the first carrier in the unlicensed frequency spectrum band, wherein determining the one or more sidelink resources of the first carrier in the unlicensed frequency spectrum band is based at least in part on decoding the one or more sidelink control messages transmitted in the unlicensed frequency spectrum band.

5. The method of claim 1, further comprising:
determining a set of available sidelink resources for transmission of the sidelink data that includes the one or more sidelink resources of the first carrier in the unlicensed frequency spectrum band based at least in part on respective reference signal received powers associated with one or more sidelink control messages used to reserve sidelink resources in the first carrier in the unlicensed frequency spectrum band, preferably further comprising:
determining that a sidelink resource of the first carrier in the unlicensed frequency spectrum band is available based at least in part on a reference signal received power associated with a sidelink control message that reserves the sidelink resource satisfying a threshold power.

6. The method of claim 1, further comprising:
reserving one or more sidelink resources of the second carrier in the licensed frequency spectrum band for transmission of the sidelink control signaling, wherein transmitting the sidelink control signaling includes:
transmitting the sidelink control signaling using the one or more sidelink resources of the second carrier, preferably further comprising: reserving the one or more sidelink resources of the second carrier in the licensed frequency spectrum band includes:
randomly selecting the one or more sidelink resources of the second carrier in the licensed frequency spectrum band from a set of available sidelink resources of the second carrier in the licensed frequency spectrum band; or reserving the one or more sidelink resources of the second carrier in the licensed frequency spectrum band includes:
selecting an earliest available sidelink resource in time of a set of available sidelink resources of the second carrier in the licensed frequency spectrum band.

7. The method of claim 1, wherein transmitting the sidelink control signaling includes:
transmitting the sidelink control signaling in one or more unreserved sidelink resources of the second carrier in the licensed frequency spectrum band.

8. The method of claim 1, further comprising:
determining, by the UE, one or more sidelink resources for transmission of the sidelink data in a third carrier in the unlicensed frequency spectrum band, wherein the sidelink control signaling reserves the one or more sidelink resources in the third carrier in the unlicensed frequency spectrum band; and
transmitting the sidelink data in the one or more sidelink resources of the third carrier in the unlicensed frequency spectrum band, preferably wherein the sidelink control signaling indicates a first index corresponding to the first carrier in the unlicensed frequency spectrum band and a second index corresponding to the third carrier in the unlicensed frequency spectrum band.

9. The method of claim 1, wherein the sidelink control signaling further reserves one or more sidelink resources for transmission of second sidelink data in the first carrier in the unlicensed frequency spectrum band.

10. The method of claim 1, wherein the sidelink control signaling further reserves one or more sidelink resources for transmission of second control signaling in the second carrier in the licensed frequency spectrum band.

11. The method of claim 1, wherein the sidelink control signaling is a sidelink control information message transmitted in a physical sidelink control channel.

12. The method of claim 1, wherein the sidelink control signaling includes a medium access control-control element, radio resource control signaling, or a combination thereof, transmitted in a physical sidelink shared channel.

13. The method of claim 1, wherein the sidelink data is transmitted on a physical sidelink shared channel.

14. An apparatus for wireless communication at a user equipment, UE, comprising:
means for determining (625), by the UE, one or more sidelink resources for transmission of sidelink data in a first carrier in an unlicensed frequency spectrum band;
means for transmitting (630), by the UE, sidelink control signaling in a second carrier in a licensed frequency spectrum band to reserve the one or more sidelink resources of the first carrier in the unlicensed frequency spectrum band;
means for transmitting (630) the sidelink data in the one or more sidelink resources of the first carrier in the unlicensed frequency spectrum band based at least in part on transmitting the sidelink control signaling; and
means for transmitting (630) second control signaling in the one or more sidelink resources of the first carrier in the unlicensed frequency spectrum band to reserve one or more sidelink resources for transmission of second sidelink data in the first carrier in the unlicensed frequency spectrum band.

15. The apparatus of claim 14, further comprising means for performing a method according to any of claims 2 to 13.

## Patentansprüche

1. Verfahren zur drahtlosen Kommunikation an einem Benutzergerät, UE, umfassend:
Bestimmen (1305), durch das UE, einer oder mehrerer Sidelink-Ressourcen zur Übertragung von Sidelink-Daten in einem ersten Träger in einem unlizenzierten Frequenzspektrumband;
Übertragen (1310), durch das UE, von Sidelink-Steuersignalisierung in einem zweiten Träger in einem lizenzierten Frequenzspektrumband, um die eine oder mehreren Sidelink-Ressourcen des ersten Trägers in dem unlizenzierten Frequenzspektrumband zu reservieren;
Übertragen (1315) der Sidelink-Daten in der einen oder den mehreren Sidelink-Ressourcen des ersten Trägers in dem unlizenzierten Frequenzspektrumband basierend zumindest teilweise auf dem Übertragen der Sidelink-Steuersignalisierung; und
Übertragen (1320) von zweiter Steuersignalisierung in der einen oder den mehreren Sidelink-Ressourcen des ersten Trägers in dem unlizenzierten Frequenzspektrumband, um eine oder mehrere Sidelink-Ressourcen zur Übertragung von zweiten Sidelink-Daten in dem ersten Träger in dem unlizenzierten Frequenzspektrumband zu reservieren.

2. Verfahren nach Anspruch 1, ferner umfassend:
Durchführen, vor dem Übertragen der Sidelink-Daten, einer Kanalzugriffsprozedur, die mit der einen oder den mehreren Sidelink-Ressourcen des ersten Trägers assoziiert ist, wobei das Übertragen der Sidelink-Daten zumindest teilweise auf dem Durchführen der Kanalzugriffsprozedur basiert.

3. Verfahren nach Anspruch 1, ferner umfassend:
Decodieren einer oder mehrerer Sidelink-Steuernachrichten, die in dem lizenzierten Frequenzspektrumband übertragen werden, um einen Satz von verfügbaren Sidelink-Ressourcen zur Übertragung der Sidelink-Daten zu bestimmen, der die eine oder die mehreren Sidelink-Ressourcen des ersten Trägers in dem unlizenzierten Frequenzspektrumband beinhaltet, wobei das Bestimmen der einen oder der mehreren Sidelink-Ressourcen des ersten Trägers in dem unlizenzierten Frequenzspektrumband zumindest teilweise auf dem Decodieren der einen oder der mehreren Sidelink-Steuernachrichten basiert, die in dem lizenzierten Frequenzspektrumband übertragen werden.

4. Verfahren nach Anspruch 1, ferner umfassend:
Decodieren einer oder mehrerer Sidelink-Steuernachrichten, die in dem unlizenzierten Frequenzspektrumband übertragen werden, um einen Satz von verfügbaren Sidelink-Ressourcen zur Übertragung der Sidelink-Daten zu bestimmen, der die eine oder die mehreren Sidelink-Ressourcen des ersten Trägers in dem unlizenzierten Frequenzspektrumband beinhaltet, wobei das Bestimmen der einen oder der mehreren Sidelink-Ressourcen des ersten Trägers in dem unlizenzierten Frequenzspektrumband zumindest teilweise auf dem Decodieren der einen oder der mehreren Sidelink-Steuernachrichten basiert, die in dem unlizenzierten Frequenzspektrumband übertragen werden.

5. Verfahren nach Anspruch 1, ferner umfassend:
Bestimmen eines Satzes von verfügbaren Sidelink-Ressourcen zur Übertragung der Sidelink-Daten, der die eine oder die mehreren Sidelink-Ressourcen des ersten Trägers in dem unlizenzierten Frequenzspektrumband beinhaltet, basierend zumindest teilweise auf jeweiligen Referenzsignalempfangsleistungen, die mit einer oder mehreren Sidelink-Steuernachrichten assoziiert sind, die verwendet werden, um Sidelink-Ressourcen in dem ersten Träger in dem unlizenzierten Frequenzspektrumband zu reservieren, vorzugsweise ferner umfassend:
Bestimmen, dass eine Sidelink-Ressource des ersten Trägers in dem unlizenzierten Frequenzspektrumband verfügbar ist, basierend zumindest teilweise auf einer Referenzsignalempfangsleistung, die mit einer Sidelink-Steuernachricht assoziiert ist, die die Sidelink-Ressource reserviert, die eine Schwellenleistung erfüllt.

6. Verfahren nach Anspruch 1, ferner umfassend:
Reservieren einer oder mehrerer Sidelink-Ressourcen des zweiten Trägers in dem lizenzierten Frequenzspektrumband zur Übertragung der Sidelink-Steuersignalisierung, wobei das Übertragen der Sidelink-Steuersignalisierung beinhaltet:
Übertragen der Sidelink-Steuersignalisierung unter Verwendung der einen oder der mehreren Sidelink-Ressourcen des zweiten Trägers, vorzugsweise ferner umfassend: Reservieren der einen oder der mehreren Sidelink-Ressourcen des zweiten Trägers in dem lizenzierten Frequenzspektrumband beinhaltet:
zufälliges Auswählen der einen oder der mehreren Sidelink-Ressourcen des zweiten Trägers in dem lizenzierten Frequenzspektrumband aus einem Satz von verfügbaren Sidelink-Ressourcen des zweiten Trägers in dem lizenzierten Frequenzspektrumband; oder
Auswählen einer frühesten verfügbaren Sidelink-Ressource in der Zeit eines Satzes von verfügbaren Sidelink-Ressourcen des zweiten Trägers in dem lizenzierten Frequenzspektrumband.

7. Verfahren nach Anspruch 1, wobei das Übertragen der Sidelink-Steuersignalisierung beinhaltet:
Übertragen der Sidelink-Steuersignalisierung in einer oder mehreren unreservierten Sidelink-Ressourcen des zweiten Trägers in dem lizenzierten Frequenzspektrumband.

8. Verfahren nach Anspruch 1, ferner umfassend:
Bestimmen, durch das UE, einer oder mehrerer Sidelink-Ressourcen zur Übertragung der Sidelink-Daten in einem dritten Träger in dem unlizenzierten Frequenzspektrumband, wobei die Sidelink-Steuersignalisierung die eine oder die mehreren Sidelink-Ressourcen in dem dritten Träger in dem unlizenzierten Frequenzspektrumband reserviert; und
Übertragen der Sidelink-Daten in der einen oder den mehreren Sidelink-Ressourcen des dritten Trägers in dem unlizenzierten Frequenzspektrumband, vorzugsweise wobei die Sidelink-Steuersignalisierung einen ersten Index, der dem ersten Träger in dem unlizenzierten Frequenzspektrumband entspricht, und einen zweiten Index, der dem dritten Träger in dem unlizenzierten Frequenzspektrumband entspricht, angibt.

9. Verfahren nach Anspruch 1, wobei die Sidelink-Steuersignalisierung ferner eine oder mehrere Sidelink-Ressourcen zur Übertragung von zweiten Sidelink-Daten in dem ersten Träger in dem unlizenzierten Frequenzspektrumband reserviert.

10. Verfahren nach Anspruch 1, wobei die Sidelink-Steuersignalisierung ferner eine oder mehrere Sidelink-Ressourcen zur Übertragung von zweiter Steuersignalisierung in dem zweiten Träger in dem lizenzierten Frequenzspektrumband reserviert.

11. Verfahren nach Anspruch 1, wobei die Sidelink-Steuersignalisierung eine Sidelink-Steuerinformationsnachricht ist, die in einem physikalischen Sidelink-Steuerkanal übertragen wird.

12. Verfahren nach Anspruch 1, wobei die Sidelink-Steuersignalisierung ein Medium-Access-Control-Control-Element, Funkressourcen-Steuersignalisierung oder eine Kombination davon beinhaltet, die in einem gemeinsamen physikalischen Sidelink-Kanal übertragen wird.

13. Verfahren nach Anspruch 1, wobei die Sidelink-Daten auf einem gemeinsamen physikalischen Sidelink-Kanal übertragen werden.

14. Vorrichtung zur drahtlosen Kommunikation an einem Benutzergerät, UE, umfassend:
Mittel zum Bestimmen (625), durch das UE, einer oder mehrerer Sidelink-Ressourcen zur Übertragung von Sidelink-Daten in einem ersten Träger in einem unlizenzierten Frequenzspektrumband;
Mittel zum Übertragen (630), durch das UE, von Sidelink-Steuersignalisierung in einem zweiten Träger in einem lizenzierten Frequenzspektrumband, um die eine oder mehreren Sidelink-Ressourcen des ersten Trägers in dem unlizenzierten Frequenzspektrumband zu reservieren;
Mittel zum Übertragen (630) der Sidelink-Daten in der einen oder den mehreren Sidelink-Ressourcen des ersten Trägers in dem unlizenzierten Frequenzspektrumband basierend zumindest teilweise auf dem Übertragen der Sidelink-Steuersignalisierung; und
Mittel zum Übertragen (630) von zweiter Steuersignalisierung in der einen oder den mehreren Sidelink-Ressourcen des ersten Trägers in dem unlizenzierten Frequenzspektrumband, um eine oder mehrere Sidelink-Ressourcen zur Übertragung von zweiten Sidelink-Daten in dem ersten Träger in dem unlizenzierten Frequenzspektrumband zu reservieren.

15. Vorrichtung nach Anspruch 14, ferner umfassend Mittel zum Durchführen eines Verfahrens nach einem der Ansprüche 2 bis 13.

## Revendications

1. Un procédé de communication sans fil au niveau **d'un** équipement utilisateur, UE, comprenant :
la détermination (1305), par l'UE, d'une ou plusieurs ressources sidelink pour la transmission de données sidelink dans une première porteuse dans une bande de spectre de fréquences sans licence ;
la transmission (1310), par l'UE, d'une signalisation de contrôle sidelink dans une deuxième porteuse dans une bande de spectre de fréquences sous licence pour réserver les une ou plusieurs ressources sidelink de la première porteuse dans la bande de spectre de fréquences sans licence ;
la transmission (1315) des données sidelink dans les une ou plusieurs ressources sidelink de la première porteuse dans la bande de spectre de fréquences sans licence sur la base au moins en partie de la transmission de la signalisation de contrôle sidelink ; et
la transmission (1320) d'une seconde signalisation de contrôle dans les une ou plusieurs ressources sidelink de la première porteuse dans la bande de spectre de fréquences sans licence pour réserver une ou plusieurs ressources sidelink pour la transmission de deuxièmes données sidelink dans la première porteuse dans la bande de spectre de fréquences sans licence.

2. Le procédé selon la revendication 1, comprenant en outre :
la réalisation, avant la transmission des données sidelink, d'une procédure d'accès au canal associée aux une ou plusieurs ressources sidelink de la première porteuse, dans lequel la transmission des données sidelink est basée au moins en partie sur la réalisation de la procédure d'accès au canal.

3. Le procédé selon la revendication 1, comprenant en outre :
le décodage d'un ou plusieurs messages de contrôle sidelink transmis dans la bande de spectre de fréquences sous licence pour déterminer un ensemble de ressources sidelink disponibles pour la transmission des données sidelink qui inclut les une ou plusieurs ressources sidelink de la première porteuse dans la bande de spectre de fréquences sans licence, dans lequel la détermination des une ou plusieurs ressources sidelink de la première porteuse dans la bande de spectre de fréquences sans licence est basée au moins en partie sur le décodage des un ou plusieurs messages de contrôle sidelink transmis dans la bande de spectre de fréquences sous licence.

4. Le procédé selon la revendication 1, comprenant en outre :
le décodage d'un ou plusieurs messages de contrôle sidelink transmis dans la bande de spectre de fréquences sans licence pour déterminer un ensemble de ressources sidelink disponibles pour la transmission des données sidelink qui inclut les une ou plusieurs ressources sidelink de la première porteuse dans la bande de spectre de fréquences sans licence, dans lequel la détermination des une ou plusieurs ressources sidelink de la première porteuse dans la bande de spectre de fréquences sans licence est basée au moins en partie sur le décodage des un ou plusieurs messages de contrôle sidelink transmis dans la bande de spectre de fréquences sans licence.

5. Le procédé selon la revendication 1, comprenant en outre :
la détermination d'un ensemble de ressources sidelink disponibles pour la transmission des données sidelink qui inclut les une ou plusieurs ressources sidelink de la première porteuse dans la bande de spectre de fréquences sans licence sur la base au moins en partie de puissances reçues de signal de référence respectives associées à un ou plusieurs messages de contrôle sidelink utilisés pour réserver des ressources sidelink dans la première porteuse dans la bande de spectre de fréquences sans licence, de préférence comprenant en outre :
la détermination qu'une ressource sidelink de la première porteuse dans la bande de spectre de fréquences sans licence est disponible sur la base au moins en partie d'une puissance reçue de signal de référence associée à un message de contrôle sidelink qui réserve la ressource sidelink satisfaisant à une puissance seuil.

6. Le procédé selon la revendication 1, comprenant en outre :
la réservation d'une ou plusieurs ressources sidelink de la deuxième porteuse dans la bande de spectre de fréquences sous licence pour la transmission de la signalisation de contrôle sidelink, dans lequel la transmission de la signalisation de contrôle sidelink inclut :
la transmission de la signalisation de contrôle sidelink en utilisant les une ou plusieurs ressources sidelink de la deuxième porteuse, comprenant de préférence en outre :
la réservation des une ou plusieurs ressources sidelink de la deuxième porteuse dans la bande de spectre de fréquences sous licence inclut :
la sélection aléatoire des une ou plusieurs ressources sidelink de la deuxième porteuse dans la bande de spectre de fréquences sous licence à partir d'un ensemble de ressources sidelink disponibles de la deuxième porteuse dans la bande de spectre de fréquences sous licence ; ou
la réservation des une ou plusieurs ressources sidelink de la deuxième porteuse dans la bande de spectre de fréquences sous licence inclut :
la sélection d'une ressource sidelink disponible la plus précoce dans le temps, d'un ensemble de ressources sidelink disponibles de la deuxième porteuse dans la bande de spectre de fréquences sous licence.

7. Le procédé selon la revendication 1, dans lequel la transmission de la signalisation de contrôle sidelink inclut :
la transmission de la signalisation de contrôle sidelink dans une ou plusieurs ressources sidelink non réservées de la deuxième porteuse dans la bande de spectre de fréquences sous licence.

8. Le procédé selon la revendication 1, comprenant en outre :
la détermination, par l'UE, d'une ou plusieurs ressources sidelink pour la transmission des données sidelink dans une troisième porteuse dans la bande de spectre de fréquences sans licence, dans lequel la signalisation de contrôle sidelink réserve les une ou plusieurs ressources sidelink dans la troisième porteuse dans la bande de spectre de fréquences sans licence ; et
la transmission des données sidelink dans les une ou plusieurs ressources sidelink de la troisième porteuse dans la bande de spectre de fréquences sans licence, de préférence dans lequel la signalisation de contrôle sidelink indique un premier indice correspondant à la première porteuse dans la bande de spectre de fréquences sans licence et un second indice correspondant à la troisième porteuse dans la bande de spectre de fréquences sans licence.

9. Le procédé selon la revendication 1, dans lequel la contrôle sidelink de signalisation réserve en outre une ou plusieurs ressources sidelink pour la transmission de secondes données sidelink dans la première porteuse dans la bande de spectre de fréquences sans licence.

10. Le procédé selon la revendication 1, dans lequel la signalisation de contrôle sidelink réserve en outre une ou plusieurs ressources sidelink pour la transmission de la seconde signalisation de contrôle dans la deuxième porteuse dans la bande de spectre de fréquences sous licence.

11. Le procédé selon la revendication 1, dans lequel la signalisation de contrôle sidelink est un message d'information de contrôle sidelink transmis dans un canal physique de contrôle sidelink.

12. Le procédé selon la revendication 1, dans lequel la signalisation de contrôle sidelink inclut un élément de contrôle de contrôle d'accès au support, une signalisation de contrôle de ressource radio, ou une combinaison de ceux-ci, transmis dans un canal physique partagé sidelink.

13. Le procédé selon la revendication 1, dans lequel les données sidelink sont transmises sur un canal physique partagé sidelink.

14. Un appareil pour la communication sans fil au niveau d'un équipement utilisateur, UE, comprenant :
un moyen pour déterminer (625), par l'UE, une ou plusieurs ressources sidelink pour la transmission de données sidelink dans une première porteuse dans une bande de spectre de fréquences sans licence ;
un moyen pour transmettre (630), par l'UE, une signalisation de contrôle sidelink dans une deuxième porteuse dans une bande de spectre de fréquences sous licence pour réserver les une ou plusieurs ressources sidelink de la première porteuse dans la bande de spectre de fréquences sans licence ;
un moyen pour transmettre (630) les données sidelink dans les une ou plusieurs ressources sidelink de la première porteuse dans la bande de spectre de fréquences sans licence sur la base au moins en partie de la transmission de la signalisation de contrôle sidelink ; et
un moyen pour transmettre (630) une deuxième signalisation de contrôle dans les une ou plusieurs ressources sidelink de la première porteuse dans la bande de spectre de fréquences sans licence pour réserver une ou plusieurs ressources sidelink pour la transmission de deuxièmes données sidelink dans la première porteuse dans la bande de spectre de fréquences sans licence.

15. L'appareil selon la revendication 14, comprenant en outre des moyens pour réaliser un procédé selon l'une des revendications 2 à 13.
